(19) Europäisches Patentamt
European Patent Office
Office européen des brevets

(11) Numéro de publication: 0 088 858 B1

(12) **FASCICULE DE BREVET EUROPEEN**

(45) Date de publication du fascicule du brevet: **04.06.86**

(51) Int. Cl.⁴: **B 60 T 8/18**

(21) Numéro de dépôt: **82830058.2**

(22) Date de dépôt: **16.03.82**

(54) **Valve régulatrice de freinage.**

(43) Date de publication de la demande: **21.09.83 Bulletin 83/38**

(45) Mention de la délivrance du brevet: **04.06.86 Bulletin 86/23**

(84) Etats contractants désignés: **DE FR GB IT SE**

(56) Documents cités:
**DE - A - 2 416 873**
**FR - A - 1 504 033**
**FR - A - 2 341 465**
**FR - A - 2 383 048**

(73) Titulaire: **BENDITALIA S.p.A., Via Cavalli 53/A, I-26013 Crema (IT)**

(72) Inventeur: **Cadeddu, Leonardo, Via Piacenza 29, I-26013 Crema (IT)**

(74) Mandataire: **Poidatz, Emmanuel et al, Service Brevets Bendix 44 rue François 1er, F-75008 Paris (FR)**

**EP 0 088 858 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une valve régulatrice de freinage destinée à être interposée dans un circuit hydraulique de freinage entre un maître-cylindre et les moteurs de freins de certaines roues d'un véhicule automobile.

Il a été proposé des valves régulatrices de freinage comportant un boîtier muni d'un alésage dans lequel coulisse un piston dont une extrémité sépare une chambre de sortie, adjacente au fond de l'alésage, d'une chambre d'entrée et dont l'autre extrémité sépare la chambre d'entrée de l'extérieur de l'alésage, ledit piston étant sollicité par un dispositif de commande vers l'intérieur de l'alésage dans une poisition de repos, un passage de fluide entre les chambres s'étendant dans ledit piston et des moyens formant valve dans ledit passage pour couper la communication entre les deux chambres lorsque le piston s'est déplacé à partir de sa position de repos d'une distance prédéterminée.

Dans les valves régulatrices de freinage connues (par exemple le brevet français FR-A-2 383 048) et en particulier dans celle décrite dans le brevet français FR-A-1 504 033, les moyens formant valve sont constitués par un clapet hémisphérique sollicité par un ressort en appui étanche sur un siège de petit diamètre réalisé dans le piston. Bien que cette valve fonctionne correctement, elle présente un inconvénient résultant du fait que le siège possède une section efficace qui bien que faible, reste non négligeable et entraîne un phénomène d'hystérésis dans le fonctionnement de la valve régulatrice de freinage.

L'invention a pour but d'éviter ces inconvénients et de proposer une valve régulatrice de freinage où l'hystérésis de fonctionnement est quasiment éliminée et où les moyens formant valve présentent vis-à-vis du piston une section efficace sensiblement nulle.

Pour ce faire, l'invention propose une valve régulatrice de freinage comportant un boîtier comprenant un alésage dans lequel est monté coulissant un piston dont une extrémité sépare une chambre de sortie, adjacente au fond de l'alésage, d'une chambre d'entrée de l'extérieur de l'alésage, ledit piston étant sollicité par un dispositif de commande vers l'intérieur de l'alésage dans une position de repos, un passage de fluide entre les chambres s'étendant dans un alésage interne dudit piston et des moyens formant valve dans ledit passage pour couper la communication entre les deux chambres lorsque le piston s'est déplacé à partir de sa position de repos d'une distance prédéterminée, la valve régulatrice de freinage étant caractérisée en ce que lesdits moyens formant valve sont définis par la structure suivante: une extrémité libre d'une projection fixe du boîtier est reçue coulissant de façon étanche dans ledit alésage interne, ladite projection comporte un canal reliant la chambre de sortie à une gorge annulaire réalisée sur la périphérie de la projection, des passages radiaux à travers le piston étant prévus entre la chambre d'entrée et l'alésage interne pour être en position de chevauchement avec ladite gorge tant que le déplacement du piston à partir de sa position de repos est inférieure à ladite distance prédéterminée.

Selon un mode de réalisation particulier de l'invention, la projection es solidaire d'une pièce rapportée présentant une tête épanouïe maintenue en appui sur le fond de l'alésage du boîtier et comportant à sa périphérie une gorge dans laquelle est montée une coupelle à lèvre dont la lèvre se projette vers la chambre de sortie.

L'invention est maintenant décrite en se référant à l'unique figure dans laquelle est représentée une valve régulatrice de freinage pour circuit hydraulique de freinage de véhicule automobile.

La valve régulatrice de freinage représentée sur l'unique figure comporte un boîtier 10 dans lequel est réalisé un alésage 12 dans lequel coulisse un piston 14. Le piston 14 a une première extrémité 16 coulissant dans l'alésage 12 pour séparer une chambre de sortie 18 adjacente au fond 20 du boîtier d'une chambre d'entrée 22. Le piston 14 comporte une autre extrémité 24 se projetant vers l'extérieur du boîtier et qui comporte d'une part un joint d'étanchéité 26 disposé entre la chambre d'entrée 22 et l'atmosphère et d'autre part une projection cyclindrique 28 disposée à l'extérieur de l'alésage et dans laquelle est susceptible de coulisser une tige 30 qui est convenablement associée à un dispositif de commande d'un quelconque type connu, par exemple à un dispositif sensible à la variation de la répartition des charges sur au moins un des essieux du véhicule. Une butée de caoutchouc 32 disposée entre le piston 14 et la tête de la tige 30 fait office d'amortisseur. La chambre 22 est susceptible d'être reliée par l'intermédiaire de l'orifice d'entrée 34 à une source de pression hydraulioue de freinage, par exemple à un maître-cylindre classique tandis que la chambre de sortie 18 est susceptible d'être reliée par l'orifice de sortie 36 à un jeu de moteurs de frein du véhicule. Le piston 14 comporte de plus un alésage interne 38 dont une extrémité 40 débouche dans la chambre de sortie 18 et dont l'autre extrémité 42 communique par des passages 44 avec l'extérieur de l'alésage 12. L'alésage 38 est monté coulissant sur l'extrémité libre d'une projection 46 maintenue fixe par rapport au boîtier. Dans le mode de réalisation de l'invention ici décrit, la projection 46 est solidaire d'une pièce rapportée auboîtier présentant une tête épanouie 48 maintenue en appui sur le fond de l'alésage 20 et qui présente à sa partie périphérique une gorge 50 dans laquelle est montée une coupelle à lèvre 52 dont la lèvre se projette vers l'intérieur de la chambre de sortie. Cette coupelle à lèvres 52 a pour but de maintenir la tête 48 plaquée contre le fond de l'alésage 20 lors des opérations de freinage par action de la pression régnant dans la chambre 18. La projection 46 comporte un certain nombre de passages 54, 56 et 58 reliant la chambre de sortie 18 à une gorge 60 prévue sur la périphérie de la projection 46 et susceptible de chevaucher, lorsque le piston occupe sa position de repos telle que représentée sur la figure, avec des passages radiaux 62 réalisés dans le piston 14 entre la chambre d'entrée 22 et l'alésage interne 38. L'extrémité libre de la projection 46 comporte un joint d'étanchéité 64 pour isoler la gorge 60 de l'atmosphère et l'extrémité libre du passage 58 est bouchée par un bouchon 66. Un ressort de rappel 68 disposé entre le piston 14 et une butée fixe par rapport au boîtier sollicite le piston 14 en butée contre le boîtier plus exactement contre la projection 46 dans sa position de repos telle que représentée sur la figure. Entre les deux chambres 18 et 22 est disposé un joint annulaire d'étanchéité 70 coulissant sur l'alésage 12 et faisant office de clapet anti-retour permettant le passage de fluide de la chambre de sortie 18 vers la chambre d'entrée 22 lors du relâchement de la pression de freinage. A cet effet, le joint 70 de section sensiblement rectangulaire est monté dans une gorge 72 prévue sur la partie périphérique de l'extrémité 16 du piston 14, la gorge 72 présentant une largeur axiale légèrement supérieure à la largeur du joint 70 et un diamètre minimum inférieur au diamètre interne du joint 70. Pour faciliter l'écoulement de fluide on a réalisé sur l'extrémité 16 plusieurs entailles 74. Selon une variante de la présente invention le joint rectangulaire 70 est remplacé par une coupelle à lèvre semblable à la coupelle 52 et dont la lèvre se projette vers la chambre d'entrée 22.

Bien que donné à titre d'exemple non limitatif, le présente mode de réalisation de l'invention illustre une valve régulatrice de freinage du type limiteur de pression pour laquelle les sections efficaces des deux extrémités 16 et 24 du piston 14 sont égales. Par ailleurs, il est à noter que compte tenu du fait que la communication entre les deux chambres 18 et 22 est obtenue par coulissement du piston 14 sur la projection 46 jusqu'à obturation des passages 62, les moyens formant valve ainsi définis présentent une section efficace sensiblement nulle par rapport au piston 14.

La valve régulatrice de freinage qui vient d'être décrite fonctionne de la façon suivante:

Au repos, le dispositif se trouve dans la position telle représentée sur la figure dans laquelle la gorge 60 chevauche les passages 62 opour permettre la libre communication entre les deux chambres 22 et 18. Lors d'un freinage, la pression hydraulique monte dans la chambre d'entrée 22 et le piston 14 est sollicité vers la droite de la figure à l'encontre du ressort 68 et de la force de réaction transmise à la tige 30 par le dispositif de commande. Dès que le déplacement du piston 14 a dépassé une distance prédéterminée à partir de sa position de repos, les passages radiaux 62 sont complètement obturés par la projection 46 et la communication entre les deux chambres est coupée compte tenu du fait que par ailleurs le joint d'étanchéité 70 est venu se plaquer contre la paroi gauche, si l'on considère la figure, de la gorge 72. Cette fermeture de la valve intervient pour une pression déterminée dans la chambre d'entrée 22, appelée pression de coupure et qui est fonction du tarage du ressort de rappel 68 et de la force transmise par la tige 30. Si l'on considère que la force transmise par la tige 30 demeure constante lors de la poursuite du freinage, la pression dans les moteurs de frein demeure également constante compte tenu du fait que l'augmentation de pression dans la chambre d'entrée 22 n'a pas d'influence sur les mouvements du piston 14 par suite de l'égalité des sections efficaces des épaulements 16 et 24 du piston 14. Cependant si la force de réaction transmise par la tige 30 augmente le piston est à nouveau sollicité vers la gauche de la figure pour permettre la réouverture du passage entre les orifices 34 et 36 et une augmentation de pression dans la chambre 18 jusqu'à obtenir un nouvel équilibre et une nouvelle pression de coupure. Si au contraire la force de réaction diminue, le piston 14 est sollicité vers la droite de la figure entraînant ainsi une réduction de la pression régnant dans la chambre de sortie 18. Cette dernière caractéristique est particulièrement intéressante dans les circuits de freinage de véhicules dont les valves régulatrices de freinage sont associées à une commande mécanique sensible aux variations des charges d'au moins un des essieux du véhicule. Lors du relâchement de la pression de freinage la bague 70 est dégagée de son appui étanche sur la paroi de la gorge 72 lorsque la pression dans la chambre 18 devient supérieure à celle régnant dans la chambre 22 de façon à permettre au piston 14 de revenir vers la gauche de la figure jusqu'à occuper sa position de repos.

L'invention n'est pas limitée à une valve régulatrice de freinage du type limiteur de pression mais s'étend également à une valve régulatrice de freinage du type à action proportionnelle dans laquelle la section efficace de l'extrémité 24 du piston 14 est inférieure à la section efficace de l'extrémité 16 du même piston.

**Revendications**

1. Valve régulatrice de freinage comportant un boîtier (10) comprenant un alésage (12) dans lequel est monté coulissant un piston (14) dont une première extrémité (16) sépare une chambre de sortie (18), adjacente au fond (20) de l'alésage (12), d'une chambre d'entrée (22) et dont l'autre extrémité (24) sépare la chambre d'entrée (22) de l'extérieur de l'alésage (12), ledit piston (24) étant sollicité par un dispositif de commande (30, 32, 42, 44, 68) vers l'intérieur de l'alésage (12) dans une position de repos, un passage de fluide (54, 56, 58, 60, 62) entre les chambres (18, 22) s'étendant dans un alésage interne (38) dudit piston (14) et des moyens formant valve (46, 60, 62) dans ledit passage (54, 56, 58, 60, 62) pour couper la communication entre les deux chambres (18, 22) lorsque le piston (14) s'est déplacé à partir de sa position de repos d'une distance prédéterminée, caractérisée en ce que lesdits moyens formant valve (46, 60, 62) sont définis par l'extrémité libre d'une projection fixe (46) du boîtier (10) qui est reçue coulissant de façon étanche dans ledit alésage interne (38), ladite projection (46) comporte un canal (56) reliant la chambre de sortie (18) à une gorge annulaire (60) réalisée sur la périphérie de la projection (46), des passages radiaux (62) à travers le piston (14) étant prévus entre la chambre d'entrée (22) et l'alésage interne (38) pour être en position de chevauchement avec ladite gorge (60) tant que le déplacement du piston (14) à partir de sa position de repos est inférieure à ladite distance prédéterminée.

2. Valve régulatrice de freinage selon la revendication 1, caractérisée en ce que ladite projection (46) est montée sur une pièce rapportée présentant une tête épanouie (48) maintenue en appui sur le fond (20) de l'alésage (12) du boîtier (10) et comportant à sa périphérie une gorge (50) dans laquelle est disposée une coupelle à lèvre (52) dont la lèvre se projette vers ladite chambre de sortie (18).

3. Valve régulatrice de freinage selon l'une des revendications précédentes, caractérisée en ce que le piston (14) comporte à sa première extrémité (16) une gorge périphérique (72) susceptible d'être placée entre les deux chambres (18, 22) après montage du piston (14) dans le boîtier (10), ladite gorge (72) comportant un joint d'étanchéité annulaire (70) faisant clapet anti-retour et permettant le passage de fluide de la chambre de sortie (18) vers la chambre d'entrée (22).

4. Valve régulatrice de freinage selon la revendication 3, caractérisée en ce que le joint d'étanchéité annulaire (70) est une coupelle à lèvre dont la lèvre se projette vers la chambre d'entrée (22).

5. Valve régulatrice de freinage selon la revendication 3, caractérisée en ce que le joint d'étanchéité annulaire (70) présente une section sensiblement rectangulaire dont la largeur est légèrement inférieure à celle de ladite gorge (60) et un diamètre inférieur légèrement supérieur au diamètre du fond de ladite gorge (60).

6. Valve régulatrice de freinage selon l'une des revendications précédentes, caractérisée en ce qu'elle est du type limiteur de pression et que les deux extrémités du piston (14) ont même section efficace.

## Patentansprüche

1. Bremsregelventil mit einem Gehäuse (10), das eine Bohrung (12) aufweist, in der ein Kolben (14) gleitend gelagert ist, wobei ein erstes Ende (16) des Kolbens eine Auslasskammer (18) angrenzend am Boden (20) der Bohrung (12) von einer Einlasskammer (22) trennt und das andere Ende (24) die Einlasskammer (22) von der Aussenseite der Bohrung (12) trennt, wobei der Kolben (14) von einer Steuervorrichtung (30, 32, 42, 44, 68) in Richtung auf das Innere der Bohrung (12) in eine Ruhestellung vorgespannt wird, einem Strömungsmittelkanal (54, 56, 58, 60, 62) zwischen den Kammern (18, 22), der sich in eine Innenbohrung (38) des Kolbens (14) hineinerstreckt, und mit ein Ventil (46, 60, 62) bildenden Mitteln in diesem Kanal (54, 56, 58, 60, 62), die die Verbindung zwischen den beiden Kammern (18, 22) unterbrechen, wenn sich der Kolben (14) aus seiner Ruhestellung um eine vorgegebene Strecke bewegt hat, dadurch gekennzeichnet, dass die das Ventil (46, 60, 62) bildenden Mittel von dem freien Ende eines festgelegten Vorsprunges (46) des Gehäuses (10) gebildet werden, der in der Innenbohrung (38) abgedichtet gleitet, dass der Vorsprung (46) einen Kanal (56) aufweist, der die Auslasskammer (18) mit einer im Umfang des Vorsprung s (46) gebildeten Ringnut (60) verbindet, und dass durch den Kolben (14) verlaufende radiale Kanäle (62) zwischen der Einlasskammer (22) und der Innenbohrung (38) vorgesehen sind, die sich in einer mit der Ringnut (60) in Verbindung stehenden Lage befinden, solange die Verschiebung des Kolbens (14) ausgehend von seiner Ruhestellung kleiner ist als die vorgegebene Strecke.

2. Bremsregelventil nach Anspruch 1, dadurch gekennzeichnet, dass der Vorsprung (46) an einem Ansatzstück angebracht ist, das einen erweiterten Kopf (48) aufweist, der in Anlage mit dem Boden (20) der Bohrung (12) des Gehäuses (10) gehalten wird und an seinem Umfang eine Nut (50) aufweist, in der eine Lippendichtung (52) angeordnet ist, deren Lippe in Richtung auf die Auslasskammer (18) vorsteht.

3. Bremsregelventil nach einem der vorhergehenden Ansprüche, dadurch gekennzeichnet, dass der Kolben (14) an seinem ersten Ende (16) eine Umfangsnut (72) aufweist, die nach dem Einbau des Kolbens (14) in das Gehäuse (10) zwischen die beiden Kammern (18, 22) gebracht werden kann, wobei diese Umfangsnut (72) eine Ringdichtung (70) enthält, die als Rückschlagventil dient und eine Strömung von der Auslasskammer (18) zur Einlasskammer (22) zulässt.

4. Bremsregelventil nach Anspruch 3, dadurch gekennzeichnet, dass die Ringdichtung (70) eine Lippendichtung ist, deren Lippe in Richtung auf die Einlasskammer (22) vorsteht.

5. Bremsregelventil nach Anspruch 3, dadurch gekennzeichnet, dass die Ringdichtung (70) einen ungefähr rechteckigen Querschnitt aufweist, dessen Breite geringfügig kleiner ist als die der Umfangsnut (72) und dessen Innendurchmesser geringfügig grösser als der Durchmesser des Bodens der Umfangsnut (72) ist.

6. Bremsregelventil nach einem der vorhergehenden Ansprüche, dadurch gekennzeichnet, dass es ein Druckbegrenzungsventil ist und dass die beiden Enden des Kolbens (14) den gleichen wirksamen Querschnitt haben.

## Claims

1. A brake regulating valve including a casing (10) comprising a bore (12) slidingly receiving a piston (14) having a first extremity (16) separating an outlet chamber (18) adjacent to the bottom (20) of the bore (12) from an inlet chamber (22) and having another extremity (24) separating the inlet chamber (22) from the exterior of the bore (12), said piston (14) being biased by a control device (30, 32, 42, 44, 68) towards the interior of the bore (12) in a rest position, a fluid passage (54, 56, 58, 60, 62) between the chambers (18, 22) extending into an internal bore (38) of said piston (14) and means forming a valve (46, 60, 62) in said passage (54, 56, 68, 60, 62) to interrupt communication between the two chambers (18, 22) when the piston (14) has been displaced from its rest position for a predetermined distance, characterized in that said valve-forming means are defined by the free end of a fixed projection (46) of the casing (10) which is slidingly received in a fluid-tight manner in said internal bore (38), said projection (46) comprising a passage (56) connecting the outlet-chamber (18) to an annular groove (60) provided on the periphery of the projection (46), radial passages (62) traversing the piston (14) being provided between the inlet chamber (22) and the interal bore (38) to be in a position of connection with said groove (60) as long as the displacement of the piston (14) from its rest position is less than said predetermined distance.

2. The brake regulating valve according to claim 1, characterized in that said projection (45) is mounted on a member comprising an enlarged head (48) maintained in engagement with the bottom (20) of the bore (12) of the casing (10) and comprising at its periphery a groove (50) receiving a lip seal (52) having a lip projecting towards said outlet chamber (18).

3. The brake regulating valve of any of the preceding claims, characterized in that the piston (14) comprises at its first extremity (16) a peripheral groove (72) adapted to be disposed between the two chambers (18, 22) when the piston (14) has been assembled in the casing (10), said groove (72) comprising an annular seal (70) forming a check valve and allowing fluid flow from the outlet chamber (18) towards the inlet chamber (22).

4. The brake regulating valve according to claim 3, characterized in taht the annular seal (70) is a lip seal having a lip projecting towards the inlet chamber (22).

5. The brake regulating valve according to claim 3, characterized in that the annular seal (70) has a substantially rectangular section having a largeness slightly smaller than that of said groove (72) and an inner diameter slightly greater than the diameter of the bottom of said groove (72).

6. The brake regulating valve according to any of the preceding claims, characterized in that it is of the pressure-limiting type and in that the two extremities of the piston (14) are of the same effective cross-section.

1/1

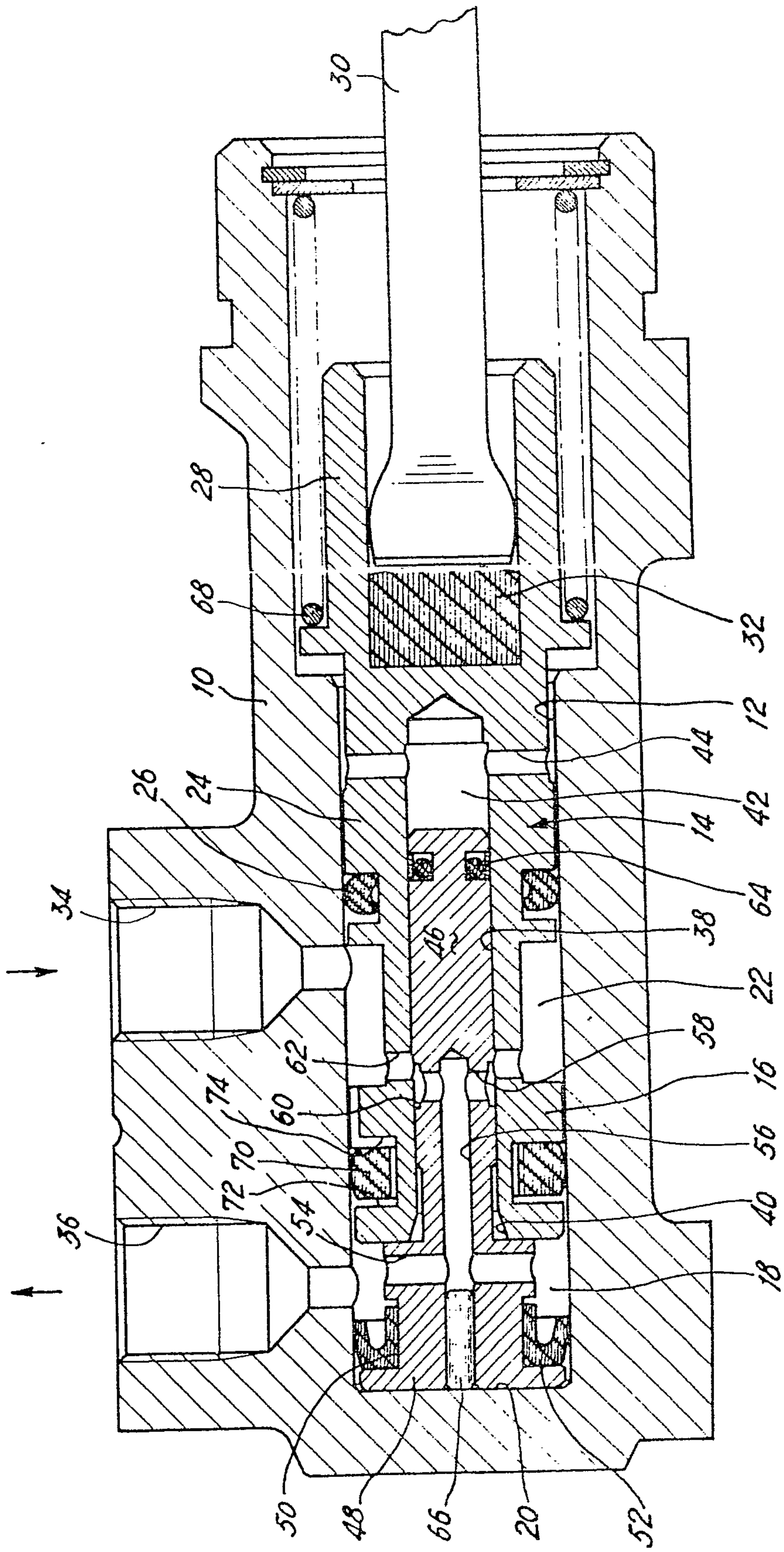
30
28
68
10
26
24
34
36
74
62
60
70
72
54
50
48
66
20
52
32
12
44
42
14
64
38
22
58
16
56
40
18